Europäisches Patentamt

European Patent Office

Office européen des brevets

(11) Publication number: **0 070 637**
**B1**

(12) **EUROPEAN PATENT SPECIFICATION**

(45) Date of publication of patent specification: **18.12.85**

(21) Application number: **82303461.6**

(22) Date of filing: **01.07.82**

(51) Int. Cl.⁴: **C 08 F 212/12,** C 09 J 3/14 //
(C08F212/12, 212:08, 210:10)

(54) Terpolymer resins.

(30) Priority: **02.07.81 GB 8120543**

(43) Date of publication of application:
**26.01.83 Bulletin 83/04**

(45) Publication of the grant of the patent:
**18.12.85 Bulletin 85/51**

(84) Designated Contracting States:
**AT BE DE FR GB IT NL SE**

(56) References cited:
**GB-A-1 378 977**

(73) Proprietor: **HERCULES INCORPORATED**
**Hercules Plaza**
**Wilmington Delaware 19899 (US)**

(72) Inventor: **Tombs, Adrian Keith**
**44 Inverine Road**
**Charlton London SE7 7NL (GB)**
Inventor: **Rustige, Jacobus**
**The River House Leigh Place**
**Cobham Surrey (GB)**

(74) Representative: **De Minvielle-Devaux, Ian**
**Benedict Peter et al**
**CARPMAELS & RANSFORD 43, Bloomsbury**
**Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 070 637

## Description

This invention relates to the field of synthetic resins. In particular, it concerns terpolymers of alpha-methylstyrene, styrene and isobutylene, and a process for the production of such terpolymers.

Resins are extensively used in the coatings and adhesives industries. They are included in the formulations to provide, inter alia, enhanced tack properties. Resins formed by modifying natural resins have, for many years, been widely used but such resins are sometimes expensive, and, in any case, their properties are not always fully satisfactory. A more economical alternative has been found in entirely synthetic resins manufactured from petroleum monomers.

In assessing the suitability of synthetic resins in coating or adhesive formulations, a number of criteria must be satisfied if the product is to be commercially viable. The ability to impart a satisfactory tackiness in a coating or adhesive composition is an essential feature of a useful resin for many purposes. The colour of the resin is also important, since transparent or "water white" coatings and adhesives are commercially more valuable. For similar reasons, the resins should preferably have little or no odour. Compatibility wtih components in a coating or adhesive composition must be optimised. Thermal stability, a suitable softening temperature and melt viscosity are also important properties which may affect their utility in adhesives and coating compositions.

Resins derived from petroleum fractions generally have a dark colour and poor thermal stability. The colour may be partially removed by hydrogenation of the petroleum resin but the thermal stability is nevertheless often inadequate.

Pale resins may be produced from refined raw materials, such as alpha-methylstyrene (AMS) and styrene. These have the disadvantage that they do not impart sufficient tack to pressure sensitive adhesives (PSA).

It is known to increase tackiness of synthetic resins by introducing aliphatic groups contained in compounds such as indene or isopropenyl toluene into the mixture of monomers to be polymerised. In one such formulation, isobutylene is used to introduce aliphatic groups.

In particular, U.S. Patent 2,814,738 discloses a terpolymer containing up to 53.5% of alpha-methylstyrene, 16 to 88 percent of styrene and 1 to 63 percent of isobutylene. British Patent 1,378,977 discloses a similar terpolymer. The terpolymer may have a softening point of 70 to 100°C. It may be prepared in solvents having a water content of 0 to 0.1% by weight, at a temperature of −20 to 100°C.

In attempts to form a terpolymer by copolymerising alpha-methylstyrene, styrene and isobutylene, it has been widely accepted that to achieve satisfactory resins and reasonable yields with good thermal stability, a substantial quantity of styrene and undesirably low proportions of alpha-methylstyrene and isobutylene must be used. High styrene levels lead to low compatibility as evidenced by high cloud points, and high levels of isobutylene can result in undesirably low softening points. It would be desirable to have a relatively high level of alpha-methylstyrene in an effort to achieve high compatibility with a relatively high softening point. We have surprisingly discovered that a satisfactory terpolymer comprising alpha-methylstyrene, styrene and isobutylene can be made under certain carefully controlled conditions, without encountering the formulation difficulties that previous experience indicated would be unavoidable.

There is provided a terpolymer resin of alpha-methylstyrene, styrene and isobutylene, characterised in that it comprises 54 to 85 weight percent of alpha-methylstyrene, 10 to 41 weight percent of styrene and 5 to 36 weight percent of isobutylene. A preferred resin has an R and B softening point between 70 and 100°C and a Picco OMS Cloud Point which is below 20°C.

Also, according to this invention, a process for the manufacture of such terpolymer resin, in which alphamethylstyrene, styrene and isobutylene are polymerised in an optionally chlorinated aliphatic or aromatic hydrocarbon in the presence of a Friedel-Crafts catalyst, is characterised in that 55 to 85 weight percent of alpha-methylstyrene, 6.9 to 30 weight percent of styrene and 5 to 40 weight percent of isobutylene are dried to a water content below 60 parts per million before being polymerised in the solvent.

While monomers of high purity may be used, this invention envisages additionally the use of commercially-available monomers. The isobutylene feed in particular may vary in composition but should contain isobutylene as the major reactive component.

Preferably the copolymerisation is carried out between −20°C and 45°C.

It is essential that the monomers and solvent used in the copolymerisation have in combination a water content below 60 parts per million. Preferably, the water content should be less than 50 parts per million. This is an important feature of the process according to the invention, and means that the water content is much lower than in conventional polymerisation processes. The monomers and the solvent should be carefully dried before polymerisation is initiated.

It is necessary to copolymerise the reactants in the presence of at least one Friedel-Crafts catalyst, preferably boron trifluoride in the form of its phenol adduct.

The solvents to be used are the type commonly employed in Friedel-Crafts polymerisation reactions, and as indicated above, may be an optionally chlorinated aliphatic or aromatic hydrocarbon.

The following specific Examples indicate how the resins of the present invention optimise the properties of compatibility with other compounds used in the formulation of coating and adhesive compositions, tackiness, lack of colour, thermal stability, useful softening points, etc. Compatibility with the components of coating and adhesive compositions is estimated by using a cloud point test of a type which

2

# 0 070 637

is well known to those persons skilled in the art. As will be shown, the resins, the subject of the present invention, combine the good tackification afforded by the relatively high levels of isobutylene with the thermal stability and higher softening points afforded by the alpha-methylstyrene/styrene system in which unconventionally high levels of alpha-methylstyrene are used. Such high levels of alpha-methylstyrene have previously been thought to be of little utility in a commercial resin.

Example 1

Alpha-methylstyrene, styrene and isobutylene in the proportions indicated in Table 1 and a solvent (Solvesso® 100) were dried over an 3,175 mm (1/8th. inch) molecular sieve to a level of less than 50 parts per million of water. The temperature of the vessel was adjusted to −3°C. (3°C below the polymerisation temperature of 0°C), with a dry ice/ethanol bath. Gaseous $BF_3$ was used as catalyst. It was added intermittently (flushing the inlet tube with nitrogen). The polymerisation is exothermic and the temperature therefore needed control with the dry ice/ethanol bath. After a reaction period of 30 minutes, the polymerisation was allowed to continue for a further 30 minutes. The solution was washed with dilute sodium hydroxide solution and twice with water. The resin was recovered by steam stripping at 235°C at atmospheric pressure.

Example 2

A similar preparation to that described in Example 1 was performed, except that a polymerisation temperature of 20°C was used and the vessel was adjusted to a temperature of 17°C (3°C below the polymerisation temperature).

Comparative Example A

A similar preparation to that described in Example 1 was performed, except that no isobutylene was added. The resulting composition resembles commercially-available alpha-methylstyrene/styrene resins.

TABLE 1

| Example | A | 1 | 2 |
|---|---|---|---|
| Alpha-methylstyrene (parts) | 75 | 75 | 75 |
| (% of monomers) | 75 | 60 | 60 |
| Styrene (parts) | 25 | 25 | 25 |
| (% of monomers) | 25 | 20 | 20 |
| Isobutylene (parts) | — | 25 | 25 |
| (% of monomers) | — | 20 | 20 |
| Solvent (parts) | 200 | 200 | 200 |
| Polymerisation temperature °C | 0 | 0 | 20 |
| Yield (parts) | 97 | 115 | 112 |
| (% of monomers) | 97 | 92 | 90 |
| HDSP (°C) | 127 | 124 | 83 |
| OMS Cloud point (°C) | >183 | 140 | 17 |
| Colour (Gardner test; 50% solution in toluene) | <1 | <1 | <1 |

These results indicate that the addition of isobutylene has improved the compatibility of the resin in comparison to the resin of Comparative Example A. This is shown by the lower cloud points of the resins of Examples 1 and 2. The greatly-improved compatibility of the product of Example 2 is accompanied by a lowering in the softening point.

Example 3

Alpha-methylstyrene, styrene and a solvent (Solvesso® 100) in the proportions indicated in Table 2 were dried to less than 50 ppm of water over an 3,175 mm (1/8th inch) molecular sieve. An isobutylene rich

3

stream was added, again in the proportion shown in Table 2. The stream contained 45% isobutylene (as the major reactive component). The mixture was charged to a round bottomed flask. The temperature was adjusted to 30°C. with a dry ice/ethanol bath. BF₃ gas was added intermittently (flushing the inlet tube with nitrogen). The polymerisation is exothermic and the temperature therefore needed control with a dry ice/ethanol bath. After a reaction period of 30 minutes, the polymerisation was allowed to continue for a further 30 minutes. The solution was washed with dilute sodium hydroxide solution and then twice with water. The solution was steam stripped at 235°C at atmospheric pressure to remove the solvent.

Comparative Example B

A similar preparation was performed to that described in Example 3 except that no isobutylene stream was included in the reaction mixture. As in Comparative Example A, the resulting composition resembles commercially-available alpha-methylstyrene styrene resins according to the prior art.

In Table 2, the monomer percentages are given on the basis that the isobutylene feed stock contains 45% isobutylene. The total monomer is taken to include the alpha-methylstyrene, the styrene and the isobutylene content of the isobutylene stream.

TABLE 2

| Example | B | 3 |
|---|---|---|
| Alpha-methylstyrene (parts) | 75 | 75 |
| (% of monomers) | 75 | 55 |
| Styrene (parts) | 25 | 25 |
| (% of monomers) | 25 | 18 |
| Isobutylene stream (parts) | — | 80 |
| (% isobutylene on monomers) | — | 27 |
| Solvent (parts) | 200 | 200 |
| Example | B | 3 |
| Polymerisation temperature (°C) | 30 | 30 |
| Yield (parts) | 92 | 93 |
| (% of monomers) | 92 | 68 |
| HDSP °C | 65 | 60 |
| Colour | <1 | 1 |
| OMS Cloud Point °C | −12 | −45 |

These results show that while the terpolymer produced is similar to conventional alpha-methylstyrene/styrene resins in softening point and colour, the lower cloud point of the terpolymer may be expected to give it better properties in adhesives. Generally the higher polymerisation temperature of 30°C produces a lower softening point than polymerisations of the present invention performed at 0°C.

The following experiments were conducted to assess the nature of the terpolymers of the present invention which result from different Friedel-Crafts catalysts and the effect of varying the catalyst concentrations in the polymerisation reactions.

Example 4

Alpha-methylstyrene, styrene and isobutylene were polymerised in the proportions given in Table 3. Polymerisations were carried out on dried sparged feed in a one-litre batch reactor. Using a simultaneous addition technique, 2 parts of BF₃-phenol were used as the Friedel-Crafts catalyst. The reaction mixture was deactivated with ammonia (the Lewis acid catalyst being precipitated as the ammonium adduct), filtered and then steam stripped at 235°C.

Example 5

A similar preparation to that described in Example 4 was performed except that 0.6 parts of the BF₃-phenol Friedel-Crafts catalyst was used.

4

# 0 070 637

In Table 3, the monomer-percentages are given on the basis that the isobutylene feedstock contains 45% isobutylene. The total monomer is taken to include the alpha-methylstyrene, the styrene and the isobutylene content of the isobutylene stream.

TABLE 3

| Example | 4 | 5 |
|---|---|---|
| Alpha-methylstyrene (parts) | 75 | 75 |
| (% of monomers) | 56 | 69 |
| Styrene (parts) | 25 | 25 |
| (% of monomers) | 19 | 23 |
| Isobutylene stream (parts) | 75 | 20 |
| (% isobutylene on monomers) | 25 | 8 |
| Solvent (parts) | 200 | 100 |
| $BF_3$-phenol (parts) | 2 | 0.6 |
| Polymerisation temperature (°C) | 0—5 | 15 |
| Yield (parts) | 100 | 95 |
| (% of monomers) | 75 | 87 |
| Softening point (°C) (R+B) | 78 | 57 |
| OMS Cloud Point (°C) | <−10 | −35 |

It is evident from these results that low concentrations of Friedel-Crafts catalysts give an adequate performance in the polymerisations of the invention.

Example 6

A preparation was made substantially as described in Example 3 using 90 parts (62% on total monomers) alpha-methylstyrene, 10 parts (6.9% on total monomers) styrene, 100 parts (31.1% on total monomers) isobutylene and 100 parts of solvent (Solvesso® 100). The mixture was polymerised at 10°C. The resulting resin, obtained in good yield, was of excellent colour, had a high softening point (115°C) and reasonable compatibility. The OMS cloud point was 122°C.

These results show that a viable terpolymer can be made with high concentrations of alpha-methylstyrene in the feedstock.

Example 7

A laboratory preparation of a resin of the present invention was performed as described in Example 3. The dried feedstock comprised 64 weight percent alpha-methylstyrene, 21 weight percent styrene and 15 weight percent isobutylene (the last being measured assuming 45% purity in the feedstock). The resin was evaluated for its adhesive properties, using tests known in the art. The softening point of this resin was 76°C by Ring and Ball test. The cloud point of the resin was −55°C.

Pressure sensitive adhesive (PSA) evaluation

Adhesives were prepared from a natural rubber (NR) stock solution of 13% solids, and cast on to Mylar type 0 (50 micrometers thickness) to a dry coating weight of $20\pm1$ g/m². One film of each PSA was stored overnight at 23°C, 50% relative humidity prior to testing, and a further set of films aged at 40°C over 14 days, then stored overnight at 23°C and 50% relative humidity before testing. Formulations and results are shown in Table 4. Three formulations were tested. Figures in parenthesis indicated standard deviations.

0 070 637

TABLE 4

| Formulation | | 1 | 2 | 3 |
|---|---|---|---|---|
| Natural rubber (w/w dry basis) | | 100 | 100 | 100 |
| Resin of Example 7 | | 80 | 100 | 120 |
| Cyanox (Trade Mark) 2246 (antioxidant) | | 1 | 1 | 1 |
| Toluene/SBP2N (50/50) | | | to 21% solids | |
| Peel adhesion (gf/2.54 cm) | Initial | 45 | 178 | 381 |
| | Aged | 26 | 50 | 274 |
| Rolling ball tack (cm) | Initial | 3.4 (0.9) | 5.8 (0.8) | 3.2 (1.0) |
| | Aged | 4.1 (0.4) | 2.8 (0.4) | 3.7 (0.6) |
| Probe tack (g.f.) | Initial | 264 (17.8) | 456 (30.5) | 637 (39.0) |
| | Aged | 281 (26.3) | 356 (103.8) | 455 (82.6) |
| Shear adhesion min. 2.5 kg | Initial | 117 | 1893 | 1350 |
| | Aged | 28 | 1095 | 1266 |

In the above Table, the Peel Adhesion test is PSTC-1, the Rolling Ball Tack test is PSTC-6, the Probe Tack test is ASTM D2979-71 and the Shear Adhesion test is PSTC-7.

The overall performance of the resins, the subject of the present invention, is comparable to resins currently in use in PSA applications.

Example 8—Hot melt evaluation

Peel adhesion was tested as follows. Hot melt adhesives (HMA) were prepared and cast at 20—22 g/m$^2$, using an Acumeter LH-1 at 160°C. The following formulation was used.

Elvax (Trade Mark) 260 (g):          30

Techniwax (Trade Mark) 9211 (g): 25

Resin of the invention (7):          45

Topanol (Trade Mark) (g):          0.2.

Five coated paper samples were heat-sealed to super-calendered semi-bleached paper, aluminium foil and polyethylene film using the following heat-seal conditions

Paper/polyethylene film          93°C/0.138 Nmm$^{-2}$/25
Paper/paper; paper/aluminium foil          121°C/0.138 Nmm$^{-2}$/25

The T-peel specimens were peeled at 30 cm min$^{-1}$ on an Instron 1026 tensile testing machine, the data obtained are given in Table 5.

TABLE 5
Peel adhesion (gf/25 mm)

| Paper/paper | Paper/polyethylene | Paper/aluminium |
|---|---|---|
| 304 (22) | 145 (17) | 293 (40) |

6

**0 070 637**

The figures in parentheses are again standard deviations. These results show improvement over resins presently available.

The tensile properties of HMA made from the resins of the present invention were tested as follows. Five replicate tensile specimens were prepared from the adhesive formulations and tested at 300 mm min$^{-1}$ on an Instron 1026 tensile testing machine, noting the yield and breaking forces and the elongation at break for each one. All five replicates were preconditioned in an Instron 3111 environmental cabinet operating at 0°C. The results are given in Table 6.

TABLE 6

| Yield point (kg) | | Tensile strength (Nmm$^{-2}$) | | Elongation of break % | |
|---|---|---|---|---|---|
| 23°C | 0°C | 23°C | 0°C | 23°C | 0°C |
| 2.3 (0.3) | 8.5 (1.6) | — | 9.0 (1.0) | >1200 | 12.4 (56.0) |

These results indicate that the resins of the present invention exhibit high elasticity in HMA formulations, maintaining a soft, ductile nature at sub-ambient temperatures.

The viscosity stability of HMA made from the resins of the present invention was tested as follows. The initial viscosity was measured at 177°C using a Brookfield RVT synchro-lectric viscometer fitted with a Thermosel chamber. The adhesive was aged at 177°C in an oven over 72 hours taking daily viscosity readings at 177°C and simultaneously noting changes in the HMA appearance. The spindle/speed of the viscometer was 29/100. The results are given in Table 7.

TABLE 7
Viscosity at 177°C (cp or mPas)

| Initial | 24 hr. | 48 hr. | 72 hr. |
|---|---|---|---|
| 5350 | 5110 | 4580 | 3450 |

This gradual drop in viscosity shows an excellent heat stability in comparison with other resins known to the art.

Example 9

The process of the present invention has been scaled up to plant production levels. Batch and semi-continuous preparations, similar to those described in Examples 1—6 were carried out to ascertain the optimal conditions for large scale continuous preparation. These were estimated as: reactor temperature 15°C, catalyst level about 0.30% on the total feed and C4 hydrocarbon fraction containing about 40% isobutylene monomer.

The first of two reactors in the plant process was continuously charged with a feed containing 64 weight percent alpha-methylstyrene, 28 weight percent styrene and 8 weight percent isobutylene. The isobutylene value takes into consideration that the C4 feed used contained about 37% pure isobutylene.

The feed was dried to 50—60 p.p.m. moisture level in activated alumina drying tubes. The initial BF$_3$-phenol catalyst flow was estimated at 0.35 weight percent on total feed. After a strip sample was taken after 7 hours, this rate was reduced to 0.27 weight percent on total feed. The average catalyst flow was 0.30%. The reactor temperature was kept at 15°C for both reactors during the entire run. The residence time was 2.5 hours for the first reactor and 4 hours for the second reactor.

The yield of this test run was 77 weight percent on monomers. The resin produced was of good quality. It had an OMS cloud point averaged at −18°C. This cloud point is roughly 30°C below the OMS cloud point of corresponding resins without added isobutylene.

The softening point was 75°C Ring and Ball. The resin was clear and the colour was less than 1 Gardner unit at 50% in toluene.

In order to assess the resin made by this process, the HMA properties of the resin were compared with the properties of resins currently in use in the coatings and adhesives industries (Comparative Examples C—F) and two other resins prepared in the laboratory and made in accordance with the teaching of U.S. Patent 2,814,738 (Comparative Examples G and H). This comparison is made in Table 8.

Comparative Example C

Kristalex (Trade Mark) F 85 (Hercules). A copolymer of alpha-methylstyrene and styrene (softening point 85°C by Ring and Ball).

Comparative Example D

Piccotex (Trade Mark) 75 (Hercules). A copolymer of vinyl toluene and alpha-methylstyrene (softening point 75°C by Ring and Ball).

7

Comparative Example E

Escorez (Trade Mark) 5300. A hydrogenated cycloaliphatic resin (softening point 100°C by Ring and Ball).

Comparative Example F

Arkon (Trade Mark) M100. A hydrogenated aromatic resin derived from a petroleum fraction (softening point 100°C by Ring and Ball).

Comparative Example G

A terpolymer resin was made using a feedstock comprising 50 weight percent of alpha-methylstyrene, 42 weight percent of styrene and 8 weight percent of isobutylene. The softening point (Ring and Ball) was 76°C and the OMS Cloud Point was 24°C.

Comparative Example H

Another terpolymer was made using a feedstock comprising 23 weight percent of alpha-methylstyrene, 68 weight percent of styrene and 9 weight percent of isobutylene. The softening point (Ring and Ball) was 75°C, and the OMS Cloud Point was 58°C.

TABLE 8

| Example resin | 9 | C | D | E | F | G | H |
|---|---|---|---|---|---|---|---|
| Peel adhesion (gf/25 mm) | | | | | | | |
| Paper/paper | 286 | 81 | 96 | 62 | 65 | 222 | 192 |
| Paper/aluminium | 250 | 136 | 150 | 99 | 135 | 200 | 252 |
| Paper/polyethylene | 106 | 55 | 48 | 32 | 44 | 97 | 70 |
| 0°C Tensile strength | | | | | | | |
| Strength ($Nmm^{-2}$) | No failure | 10.3 | — | 11.1 | — | 10.36 | 9.71 |
| Elongation (%) | 300+ | 14 | — | 10 | — | 183 | 69 |
| Wax cloud point °C | 83 | 111 | 87 | 85 | 84 | 97 | 177.5 |
| 177°C for 72 hours | ←No gelation→ | | | ←Gelation→ | | ←No gelation→ | |

In all the materials where test results are given in Table 8, the formulation of the adhesive is the same as shown in Example 8 and the test methods are the same.

The reactants have different rates of polymerisation, which is the reason the ranges of percentages given for the monomers in the polymer are slightly different from those given for the monomers to be reacted to form the polymer.

The preferred products of the invention are characterised by a softening point which is between 70 and 100°C (for example 70 to 90°C) by the R+B method and a cloud point which is below 20°C by the Picco OMS Cloud point method.

The HDSP softening point is the Hercules Drop Softening Point. This is measured in a manner which is familiar to many in the art.

The Picco OMS Cloud Point is measured in a manner which is also familiar to many in the art.

**Claims**

1. A process for the production of a terpolymer resin in which alpha-methylstyrene, styrene and isobutylene are polymerised in an optionally chlorinated aliphatic or aromatic hydrocarbon in the presesnce of a Friedel-Crafts catalyst, characterised in that there are used 55 to 85 weight percent of alpha-methylstyrene, 6.9 to 30 weight percent of styrene and 5 to 40 weight percent of isobutylene and in that these monomers and solvent are dried so that their water content is below 60 parts per million before the polymerisation.

2. A process according to claim 1 in which the said water content is reduced to below 50 parts per million.

3. A process according to claim 1 or 2 in which the polymerisation is carried out between −20°C and 45°C.

4. A terpolymer resin of alpha-methylstyrene, styrene and isobutylene characterised in that it comprises 54 to 85 weight percent of alpha-methylstyrene, 10 to 41 weight percent of styrene and 5 to 36 weight percent of isobutylene.

5. A resin according to claim 4 which has an R and B softening point between 70 and 100°C and a Picco OMS Cloud Point which is below 20°C.

6. A hot melt adhesive comprising an elastomer, a wax and a resin, characterised in that the resin is a resin according to claim 4 or 5 or a resin made by a process according to any of claims 1 to 3.

## Patentansprüche

1. Verfahren zur Herstellung eines Terpolymerharzes, wobei alpha-Methylstyrol, Styrol und Isobutylen in einem gegebenenfalls chlorierten aliphatischen oder aromatischen Kohlenwasserstoff in Gegenwart eines Friedel-Crafts Katalysators polymerisiert werden, dadurch gekennzeichnet, daß 55 bis 85 Gew.-% alpha-Methylstyrol, 6,9 bis 30 Gew.-% Styrol und 5 bis 40 Gew.-% Isobutylen verwendet werden und daß diese Monomere und Lösungsmittel so getrocknet werden, daß deren Wassergehalt unter 60 Teile pro Million vor der Polymerisation beträgt.

2. Verfahren nach Anspruch 1, wobei der Wassergehalt auf unter 50 Teile pro Million reduziert ist.

3. Verfahren nach Anspruch 1 oder 2, wobei die Polymerisation zwischen −20°C und 45°C durchgeführt wird.

4. Terpolymerharz von alpha-Methylstyrol, Styrol und Isobutylen, dadurch gekennzeichnet, daß es 54 bis 85 Gew.-% alpha-Methylstyrol, 10 bis 41 Gew.-% Styrol und 5 bis 36 Gew.-% Isobutylen enthält.

5. Harz nach Anspruch 4, das einen R und B Erweichungspunkt zwischen 70 und 100°C und einen Picco OMS Trübungspunkt unter 20°C hat.

6. Heißschmelzender Klebstoff, der ein Elastomer, ein Wachs und ein Harz enthält, dadurch gekennzeichnet, daß das Harz ein Harz nach Anspruch 4 oder 5 oder ein Harz, das durch ein Verfahren nach einem der Ansprüche 1 bis 3 hergestellt wurde, ist.

## Revendications

1. Procédé de fabrication d'une résine polymère ternaire dans laquelle de alpha-méthylstyrène, du styrène et de l'isobutylène sont polymérisés dans un hydrocarbure aliphatique ou aromatique, éventuellement chloré, en présence d'un catalyseur Friedel-Crafts, caractérisé en ce qu'on utilise de 55 à 85% en poids d'alpha-méthylstyrène, de 6,9 à 30% en poids de styrène et de 50 à 40% en poids d'isobutylène et on sèche ces monomères et le solvant de telle façon que leur teneur en eau soit inférieure à 60 parties par million avant la polymérisation.

2. Procédé suivant la revendication 1 caractérisé en ce que la teneur en eau est réduite à une valeur inférieure à 50 parties par million.

3. Procédé suivant la revendication 1 ou 2 caractérisé en ce que la polymérisation est réalisée à une température comprise entre −20°C et 45°C.

4. Une résine polymère ternaire constituée d'alpha-méthylstyrène, de styrène et d'isobutylène, caractérisée en ce qu'elle comprend de 54 à 85% en poids d'alpha-méthylstyrène, de 10 à 41% en poids de styrène et de 5 à 36% en poids d'isobutylène.

5. Une résine suivant la revendication 4 caractérisée en ce qu'elle a un point de ramollissement (méthode par anneau et bille) compris entre 70 et 100°C et un point de trouble Picco OMS qui est inférieur à 20°C.

6. Une colle fusible comprenant un élastomère, une cire et une résine caractérisée en ce que la résine est une résine suivant la revendication 4 ou 5 ou une résine obtenue par un procédé suivant l'une quelconque des revendications 1 à 3.